(19)

**Europäisches Patentamt**
**European Patent Office**
**Office européen des brevets**

(11) **EP 2 156 979 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(51) Int Cl.:
*B60L 13/03* *(2006.01)* *B60M 3/04* *(2006.01)*

(21) Anmeldenummer: **08162621.0**

(22) Anmeldetag: **19.08.2008**

(54) **Linearantrieb, Fahrgeschäft, und Verfahren zum Betrieb eines Linearantriebs**

Linear drive, ride and method for operating a linear drive

Entraînement linéaire, commerce de transport et procédé de fonctionnement d'un entraînement linéaire

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**24.02.2010 Patentblatt 2010/08**

(73) Patentinhaber: **Intrasys GmbH Innovative Transportsysteme**
**80339 München (DE)**

(72) Erfinder:
• **Speer, Rolf**
**73547, Lorch (DE)**

• **Vetter, Thomas**
**73547, Lorch (DE)**

(74) Vertreter: **Trossin, Hans-Jürgen et al**
**Ruttensperger Lachnit Trossin Gomoll Patent- und Rechtsanwälte PartG mbB Arnulfstraße 58**
**DE-80335 München (DE)**

(56) Entgegenhaltungen:
**EP-A- 0 068 328     DE-A1- 2 362 309**
**DE-A1- 3 011 980     DE-A1- 19 606 277**
**DE-U1- 9 406 330     JP-A- 52 015 009**

EP 2 156 979 B1

**Beschreibung**

TECHNISCHES GEBIET

Die vorliegende Erfindung betrifft einen Linearantrieb zum Antrieb eines Fahrzeugs entlang wenigstens eines Streckenabschnitts, umfassend: eine erste Anzahl m von Statorgruppen, die hintereinander entlang des Streckenabschnitts angeordnet sind, wobei m ≥ 2; eine zweite Anzahl n von Energieversorgungseinheiten, wobei jede der n Energieversorgungseinheiten an bestimmte Statorgruppen zur Versorgung der jeweiligen Statorgruppen mit elektrischer Energie angeschlossen ist, wobei n ≤ m; wenigstens m Schalteinheiten, wobei jede der m Schalteinheiten einer der m Statorgruppen zugeordnet ist, um den Zufluss elektrischer Energie zu einer jeweiligen Statorgruppe zu ermöglichen und/ oder zu unterbrechen; und wenigstens einen entlang des Streckenabschnitts bewegbaren Läufer, der mit den von den Statorgruppen erzeugten Magnetfeldern wechselwirkt, in deren Wirkungsbereich er sich befindet. Darüber hinaus betrifft die Erfindung ein Fahrgeschäft, umfassend eine Fahrstrecke, einen der genannten Linearantriebe, sowie wenigstens ein Fahrzeug. Außerdem betrifft die Erfindung ein Verfahren zum Betrieb eines Linearantriebs, insbesondere eines Linearantriebs wie oben beschrieben.

STAND DER TECHNIK

Fahrgeschäfte für Vergnügungsparks, Volksfeste, etc., beispielsweise Achterbahnen, können unterschiedliche Arten von Antrieben aufweisen. Ein Beispiel für herkömmliche Antriebe ist ein Kettenantrieb, bei dem ein Mitnehmer, der am Fahrzeug angeordnet ist, in eine Transportkette eingreift, um das Fahrzeug von einem ersten Punkt der Fahrstrecke an einem zweiten Punkt der Fahrstrecke zu transportieren.

Alternativ dazu wurden in jüngerer Vergangenheit auch Linearmotoren zur Bewegung eines Schlittens oder eines schienengebundenen Wagens eingesetzt. Linearmotoren sind elektrische Antriebsmaschinen, die die elektrische Energie direkt in eine geradlinige Bewegung (Translationsbewegung) umsetzen. Linearantriebe weisen elektrisch betriebene Statorabschnitte auf, die in Fahrtrichtung entweder einzeln oder in Gruppen angeordnet sind.

Mittels der Statorabschnitte wird durch Spulenströme ein sich bewegendes Magnetfeld erzeugt. Dieses übt auf einen Läufer, an dem Permanentmagnete mit abwechselnder Polarität angeordnet sind, Kräfte aus und bewegt den Läufer in Längsrichtung entlang einer Fahrstrecke. Je länger der Läufer ist, umso größer ist die magnetische Gesamtkraft des Antriebs. Der Transportschlitten ist am Läufer befestigt und muss nach einem bestimmten Bewegungsprofil beschleunigt, konstant bewegt oder abgebremst werden. Der erforderliche Abstand zwischen dem Läufer und den Statoren wird bei schienengebundenen Achterbahnen in der Regel durch Räder eingehalten. Die Abstandshalterung kann aber prinzipiell auch z.B. mit Luftkissen oder durch elektromagnetisch geregeltes Schweben erfolgen.

Prinzipiell sind bei großen zu transportierenden Massen und Beschleunigungen bzw. Hangabtriebskräften zum Antrieb eines Fahrzeugs hohe Ströme erforderlich, um mittels der Statorabschnitte ein geeignet hohes Magnetfeld zu erzeugen. Die Statorabschnitte erwärmen sich dabei relativ stark. Aus diesem Grund sollten jeweils nur die Statoren betrieben werden, in deren Bereich sich der Läufer gerade befindet. Die Statoren in Bereichen vor und hinter dem Läufer sollten dagegen stromlos sein, um sich abkühlen zu können.

Ein weiterer Grund für das Abschalten nicht benötigter Statoren liegt in der Zunahme der induktiven Spannungsabfälle. Diese erhöhen mit zunehmender Anzahl in Reihe geschalteter Statoren den Phasenversatz $\phi$ zwischen Strom und Spannung und erhöhen die Blindleistungsanteile der Schaltung.

In DE 19748911 A1 wird eine Abschaltung der unbenötigten Statoren durch Schaltereinrichtungen beschrieben, welche die Statoren kurzschließen, so dass die Ströme über die Schalter statt durch die Spulen fließen. Da stets wenigstens zwei Statorabschnitte bestromt werden, um Krafteinbrüche zu vermeiden, muss die Stromversorgung für die gleiche Wirkleistung einen größeren Strom zur Verfügung stellen als bei einer Anordnung mit Statoren, die jeweils einzeln an einem Umrichter angeschlossen sind. Zum Schalten werden aufgrund hoher Ströme und der geforderten Belastbarkeit Thyristoren oder andere Halbleiterleistungsschalter verwendet, die eine begrenzte Lebensdauer aufweisen.

Des Weiteren offenbart DE 3011980 A1 detailliert einen Linearantrieb eines Fahrzeugs, der eine Steuerung aufweist, gemäß dem Oberbegriff von Anspruch 1.

AUFGABE DER ERFINDUNG

Ausgehend davon ist es die Aufgabe der vorliegenden Erfindung, einen Linearantrieb zum Antrieb eines Fahrzeugs, ein Fahrgeschäft mit einem derartigen Linearantrieb, und ein Verfahren zum Betrieb des Linearantriebs bereitzustellen, die besonders einfach und kostengünstig herstellbar sind.

TECHNISCHE LÖSUNG

Diese Aufgabe wird gelöst durch die Bereitstellung eines Linearantriebs zum Antrieb eines Fahrzeugs gemäß dem Anspruch 1, ein Fahrgeschäft gemäß dem Anspruch 7 und ein Verfahren zum Betrieb eines Linearmotors gemäß dem Anspruch 8. Merkmale bevorzugter Ausführungsformen ergeben sich aus dem abhängigen Ansprüchen.

Ein erfindungsgemäßer Linearantrieb zum Antrieb eines Fahrzeugs entlang eines Streckenabschnitts umfasst: eine erste Anzahl m von Statorgruppen, die hintereinander entlang des Streckenabschnitts angeordnet sind, wobei m ≥ 2; eine zweite Anzahl n von Energieversorgungseinheiten, wobei jede der n Energieversorgungseinheiten an bestimmte Statorgruppen zur Versorgung der jeweiligen Statorgruppen mit elektrischer Energie angeschlossen ist, wobei n ≤ m; wenigstens m Schalteinheiten, wobei jede der m Schalteinheiten einer der m Statorgruppen zugeordnet ist, um den Zufluss elektrischer Energie zu einer jeweiligen Statorgruppe zu ermöglichen und/ oder zu unterbrechen; und wenigstens einen entlang des Streckenabschnitts bewegbaren Läufer, der mit den von den Statorgruppen erzeugten Magnetfeldern wechselwirkt, in deren Wirkungsbereich er sich befindet. Die zweite Anzahl n von Energieversorgungseinheiten beträgt wenigstens zwei (n ≥ 2), wenigstens n Statorgruppen sind als Statorgruppeneinheit entlang des Streckenabschnitts benachbart derart angeordnet und wechselweise an jeweils eine der Energieversorgungseinheiten angeschlossen, dass wenigstens eine der n Statorgruppen vor dem Eintritt des Läufers in den Wirkungsbereich der Statorgruppe und/oder nach dem Austritt des Läufers aus dem Wirkungsbereich der Statorgruppe im Wesentlichen lastfrei schaltbar ist.

Das Linearantriebssystem dient insbesondere zur Bewegung eines schienengebundenen Transportfahrzeugs, beispielsweise in einem Fahrgeschäft eines Vergnügungsparks, z.B. einer Achterbahn, mit einer Fahrstrecke und mit wenigstens abschnittsweise in Fahrtrichtung angeordneten Statorenabschnitten. Jeder der hintereinander in Fahrtrichtung angeordneten Statorabschnitte besteht aus einem oder mehreren Statorelementen, die parallel nebeneinander montiert sind. Ein Statorelement ist ein einzelner Stator, der unbeweglich in Längsrichtung der Fahrtstrecke montiert ist. Die Statoren weisen eine Induktivität auf, insbesondere eine Wicklung, durch die ein Magnetfeld erzeugt wird, sobald der Stator mit elektrischer Energie versorgt wird. Durch die Parallelschaltung mehrerer Statorelemente kann eine höhere maximale Kraft erzeugt werden als mit einem Statorelement.

Die Statorelemente innerhalb eines Statorabschnitts können elektrisch parallel oder in Reihe geschaltet sein. Bei einer Anordnung mehrerer Statorelemente in einem Statorabschnitt können entsprechend viele Läufer am Fahrzeug montiert sein, beispielsweise kann jedem Statorelement ein Läufer zugeordnet sein.

Der Läufer ist der bewegliche Teil des Linearantriebs. Er weist im Allgemeinen Wechselwirkungselemente auf, die mit den von den Statorelementen erzeugten Magnetfeldern wechselwirken, so dass eine Kraft auf den Läufer ausgeübt wird. In der Regel sind am Läufer Permanentmagnete mit abwechselnder Polarität im Abstand der Statorpole angeordnet. Je länger der Läufer ausgebildet ist, desto größer ist die magnetische Gesamtkraft des Antriebs. Der Läufer ist am Transportschlitten des Fahrzeugs befestigt. Er kann nach einem vorbestimmten Bewegungsprofil beschleunigt, mit konstanter Geschwindigkeit bewegt oder abgebremst werden. Er bewegt sich parallel zu den Statoren in einem bestimmten Abstand (Luftspalt) von diesen.

Eine Statorgruppe im Sinne der Erfindung besteht aus einem oder mehreren aufeinanderfolgenden Statorabschnitten, die elektrisch in Reihe geschaltet sind. Eine Statorgruppe kann somit einen, zwei oder mehrere Statorabschnitte aufweisen, die entlang der Fahrtrichtung hintereinander angeordnet sind. Wegen der Reihenschaltung ist das Magnetfeld einer Statorgruppe stets entweder eingeschaltet oder ausgeschaltet. Die Einschaltdauer der Stromversorgung wird verlängert, wenn mehrere Statorabschnitte in Reihe geschaltet werden und die Abschaltung erst dann erfolgen kann, wenn der Läufer den letzten Statorabschnitt einer Gruppe verlassen hat. Die Statorgruppen sind hintereinander mit jeweils einer Lücke zwischen den Statorgruppen entlang des Streckenabschnitts angeordnet.

Jeder der m Statorgruppen ist eine der m Schalteinheiten zugeordnet, um den Zufluss elektrischer Energie zu einer jeweiligen Statorgruppe zu ermöglichen und/ oder zu unterbrechen.

Erfindungsgemäß sind die Anzahl der Energieversorgungseinheiten für die Statorgruppen, die Anordnung und die Länge der Statorgruppen (also die Geometrie der Konstruktion) in Abhängigkeit von der Länge des Läufers, einer vorgegebenen maximalen Bewegungsgeschwindigkeit des Läufers, und die minimale Schaltzeit der Schalteinheiten so aufeinander abgestimmt, dass die Umschaltzeit eines Stators ausreicht, um diesen vor dem Eintritt des Läufers in den Bereich der Statorgruppe (und nach dem Austritt) lastfrei zu schalten.

Lastfrei Schalten im Rahmen der Erfindung bedeutet, dass die Last beim Schalten geringer, insbesondere wesentlich geringer, ist als die maximal anliegende Last während des Betriebs eines Stators. Die Last kann dabei weniger als 50%, weniger als 25%, weniger als 10%, weniger als 5%, oder weniger als 1% der maximal anliegenden Last betragen. Insbesondere wird als lastfreier Zustand ein strom- und spannungsfreier Zustand verstanden. Zum lastfreien Schalten muss daher die Energieversorgung deaktiviert werden, bevor geschaltet wird. Nach dem Schalten muss die Energieversorgung wieder aktiviert werden. Die gesamte Schaltzeit schließt die für diesen Vorgang benötigte Zeitspanne ein.

Mit Hilfe der Erfindung werden einerseits nur die Statoren betrieben, in deren Bereich sich der Läufer gerade befindet, um eine starke Erwärmung der Statoren zu verhindern. Es wird eine hohe Wirkleistung erzielt. Andererseits wird eine begrenzte Anzahl an Energieversorgungen (Umrichtern) benötigt, die abwechselnd aktiviert und deaktiviert werden. Kurzzeitig können auch alle Umrichter aktiviert sein. Mit Hilfe der Schalteinheiten können einzelne Statorgruppen in lastfreiem Zustand zu- und abgeschaltet werden. Aus diesem Grund kann darauf verzichtet werden, Hochlastbauteile wie Thyristoren (weitgehend) einzusetzen, da stets bei niedrigen Strömen geschaltet wird. Es genügt vielmehr, in den Schalteinheiten ausschließlich Schützkontakte mit geringerer thermischer Lastfähigkeit bei sehr kurzem Einschaltdauern zu verwenden.

Insbesondere sind eine Anzahl $k \leq m$ Statorgruppen in einer oder mehreren Statorgruppeneinheiten mit jeweils n Statorgruppen derart benachbart angeordnet, dass zwischen dem Endpunkt der letzten Statorgruppe einer ersten Statorgruppeneinheit und dem Anfangspunkt der letzten Statorgruppe der benachbarten Statorgruppeneinheit ein Abstand d besteht, der mit der Länge $L_L$ des Läufers, der minimalen lastfreien Schaltzeit T einer Schalteinheit und der maximalen Geschwindigkeit $v_{max}$ des Läufers wie folgt zusammenhängt: $d \geq v_{max} * T + L_L$. Der Läufer ist mit einer maximalen Länge ausgebildet, die kleiner oder gleich der Länge von n - 1 benachbart angeordneten Statorgruppen (und n Lücken) abzüglich des Produkts der maximalen Geschwindigkeit des Läufers und der maximalen Umschaltzeit der Statorgruppen ist. Die Länge des Läufers muss so gering sein, dass ausreichend Zeit für die Umschaltung eines Umrichters auf eine in Fahrtrichtung nächstfolgende Statorgruppe zur Verfügung steht. Die Umschaltzeit hängt hauptsächlich von der Art der verwendeten Schalter ab und liegt typischerweise im Bereich von 20 ms bis 50 ms.

Für eine möglichst geringe Kraftwelligkeit ist es vorteilhaft, die Läuferlänge gleich der Länge eines Statorabschnitts plus dem Abstand zwischen den Statorabschnitten zu dimensionieren. Es ist bevorzugt, dass die Schalteinheiten Schalter zur Herstellung und/ oder zur Trennung einer Verbindung der Statorgruppen mit den den Statorgruppen jeweils zugeordneten Energieversorgungseinheit aufweisen, wobei die Schalter zum Schalten bei geringerer als der maximalen durch die Energieversorgungseinheiten bereitgestellten Last ausgelegt sind. Insbesondere werden als Schalter Schützschalter eingesetzt. Bedarfsweise können für höhere Stromstärken zwei oder mehrere Schützkontakte parallel geschaltet sein.

In einer bevorzugten Ausführungsform weist der Linearantrieb wenigstens eine Steuerung zur Ansteuerung der Schalteinheiten und/ oder der Energieversorgungen auf.

Insbesondere weist die Steuerung wenigstens eine Positionserfassung zur Erfassung der Position des Läufers wenigstens entlang des Streckenabschnitts auf.

In einer besonders bevorzugten Ausführungsform ist die Positionserfassung als sensorlose Positionserfassung ausgebildet. Die sensorlose Positionserfassung wird über die Auswertung von Spannungen und Strömen bewerkstelligt. Es können alternativ oder zusätzlich redundant auch Geber eingesetzt werden. Geber sind vor allem bei kleinen Geschwindigkeiten (z.B. zu Beginn der Fahrt auf den ersten Segmenten) sinnvoll, da die sensorlose Positionsbestimmung i. a. bei niedrigerer Geschwindigkeit schlechter wird. Alternativ kann bei kleiner Geschwindigkeit in einen gesteuerten Betrieb umgeschaltet werden. Hier wird bei hohem Strom das bewegte Magnetfeld vorgegeben. Der Läufer folgt dem Magnetfeld gesteuert.

Die erfassten Werte können in einer Prozessanalyse ausgewertet werden. Die für die Antriebsregelung benötigten Messgrößen (z. B. Ströme, Spannungen, Positionen, Geschwindigkeiten) können bei ausreichender zeitlicher und vertikaler Auflösung als genaues Instrument für die Bestimmung wichtiger Prozessparameter oder zur Erkennung von Fehlern benutzt werden. Dies ermöglicht eine genaue Erfassung von Prozesskräften, die für verschiedene Anwendungen genutzt werden kann.

Beispielsweise kann die Kraftwelligkeit des Linearantriebs ausgeglichen werden. Die Kraft F, die zu einem Zeitpunkt t auf den Läufer wirkt, hängt vom Ort des Läufers ab, da die Kräfte vom Grad der Überlappung des Läufers und der Wirkungsbereiche der Statoren abhängen. Die Lücke zwischen den Statoren sorgt dafür, dass der Kraftverlauf bei konstantem Strom über den Weg nicht konstant ist, sondern gewisse Einbrüche im Lückenbereich aufweist. Vorteilhaft wird die Statorlänge so gewählt, dass die Summe aus Statorlänge und der Länge der Lücke gleich groß wie die Länge des Läufers ist. Dadurch befindet sich immer eine Lücke im Bereich des Läufers, egal an welcher Position sich der Läufer befindet und der Krafteinbruch wird in erster Näherung null.

In anderen Fällen ergibt sich bei konstantem Strom eine mehr oder weniger große Kraftwelligkeit. Je kleiner die Lücke zwischen den Statoren im Verhältnis zur Läuferlänge ist, desto geringer wird der Krafteinbruch. Prinzipiell ergibt sich bei konstantem Strom jedoch eine geringere Kraft, wenn der Läufer über eine Lücke fährt. Weiterhin ergibt sich eine Kraftwelligkeit durch die magnetische Anziehungskraft zwischen Stator und Rotor, die vom Strom unabhängig ist.

Die Positionsabhängigkeit der Kraftkonstanten kann prinzipiell theoretisch berechnet werden oder aber auch experimentell z. B. durch Beschleunigungsversuche oder mit Federkraftmessern gemessen werden.

Die Ortsabhängigkeit der Kraftkonstanten wird gemäß der Erfindung über die Statorströme kompensiert. Im Bereich des Krafteinbruchs muss der Strom der im Eingriff befindlichen Statoren mit einem (ebenfalls ortabhängigen) Faktor > 1 multipliziert werden, damit die Gesamtkraft konstant bleibt. Wie sich die Stromerhöhung auf die beteiligten Statoren verteilt, ist beliebig. Sinnvollerweise sollte der Anteil ungefähr proportional zum relativen Überlappungsanteil mit dem Läufer sein.

Der stromunabhängige Anteil der Kraftwelligkeit kann durch eine Messung ermittelt werden und über eine Vorsteuerung kompensiert werden. Dabei wird z.B. ein Zusatzstrom eingeprägt, welcher die Kraftwelligkeit aufhebt.

Mittels der Prozessanalyse kann außerdem die Masse des Schlittens (Wagens) bestimmt werden. Aus dem drehmomentbildenden Strom der Umrichter kann bei bekannter Ortsabhängigkeit der Kraftkonstanten die Masse des Läufers (zum Beispiel des Wagens einer Fahreinrichtung) bestimmt werden.

Eine Möglichkeit besteht darin, die proportionale Abhängigkeit der zum Beschleunigen oder Abbremsen erforderlichen Kraft zur Masse des Läufers heranzuziehen. Bei bekannter Beschleunigung a und der ortsabhängigen Kraftkonstanten $K_L(x)$ des Linearantriebs kann nach dem Newtonschen Gesetz $F=m*a$ die Masse des Läufers aus der Gesamtkraft F bestimmt werden zu $m=F/a$.

Die Positionsabhängigkeit der Kraftkonstanten kann prinzipiell theoretisch berechnet, oder auch experimentell z. B. durch Beschleunigungsversuche oder mit Federkraftmessern gemessen werden. Bei bekanntem Verlauf der Kraftkonstanten kann aus der Position des Schlittens und dem Strom die Gesamtkraft auf den Schlitten bestimmt werden. Auf einer horizontalen Beschleunigungsstrecke und bei einer Beschleunigung a kann die Masse unter Vernachlässigung der Reibung mit der Formel $m = F/a$ bestimmt werden. Auf einer geneigten Ebene kann die Hangabtriebskraft $F_h$ genutzt werden, um die Masse mit den bekannten Formeln $F_h = m * g * \sin \alpha$ (g: Erdbeschleunigung; m: Masse; $\alpha$: Neigungswinkel der Ebene) zu bestimmen. Bei gleichzeitiger Bahnbeschleunigung a erhält man:

$$F_h = m * a + m * g * \sin \alpha.$$

Daraus lässt sich wiederum die Masse m bestimmen. Bei Fahreinrichtungen in Vergnügungsparks kann so einfach überprüft werden, ob das Maximalgewicht des Wagens durch Überladung überschritten wird.

Abgesehen davon können die Reibungskräfte bestimmt, und mittels dieser Aussagen über den Schmierzustand der Läuferführungen und über den Verschleiß des Führungssystems gemacht werden. Gleitreibungskräfte sind bekanntermaßen proportional zur Normalkraft auf die Bahn und zum Gleitreibungskoeffizienten. Durch zu geringe Schmierung erhöht sich der Gleitreibungskoeffizient und damit die Gleitreibungskraft. Voraussetzung zur Bestimmung der Gleitreibung ist die Kenntnis der Gesamtmasse. Diese sollte zu Beginn der Fahrt bestimmt werden. Die Messung der Gleitreibungskraft kann ortsaufgelöst erfolgen, oder es kann über einen bestimmten Bereich gemittelt werden.

Über die ortsaufgelöste Messung von Reibungskräften können bestimmte Fehler detektiert werden, z.B. mechanische Defekte wie ausgeschlagene Wälzkörper oder verbogene Führungen. Hierzu kann ein Vergleich mit Referenzwerten erfolgen.

Die Energieversorgungseinheiten weisen vorzugsweise jeweils wenigstens einen Umrichter auf. Mit Hilfe der Umrichter kann ein durch die angeschlossenen Statorgruppen ein sich veränderndes Magnetfeld erzeugt werden. Unter Umständen können Umrichter mit unterschiedlicher Leistung eingesetzt werden, z. B. wenn deutlich variierende Vorschubkräfte in verschiedenen Bereichen der Fahrstrecke benötigt oder die Einschaltzeiten der Umrichter verringert werden sollen.

Die Umrichter sind insbesondere als Umrichter mit wenigstens zwei Ausgangsphasen ausgebildet, die über jeweils wenigstens eine Schalteinheit mit den ihnen zugeordneten Statorgruppen verbunden sind. Besonders bevorzugt ist eine drei-phasige Ausbildung der Umrichter.

Bei der vorliegenden Erfindung sind die Statorgruppen jeweils alternierend mit jeweils einer der Energieversorgungseinheiten verbunden. Dies bedeutet, dass hintereinander angeordnete Statorgruppen nicht an dieselbe Energieversorgungseinheit angeschlossen sind. In einer allgemeinen Ausführungsvariante werden Statorguppen von n = 2+x Umrichtern angesteuert ( x = 0,1,2...). Die Statorgruppen bestehen aus p = 1,2,3,... Statorabschnitten in Fahrtrichtung.

Jeder Statorabschnitt kann wiederum aus q = 1,2,3,... einzelnen Statoren quer zu Fahrtrichtung bestehen. Die einzelnen Umrichter schalten dann folgende Statorgruppen wechselweise um:

| Umrichter | 1. Umsch. Statorgrp. | 2. Umsch. Statorgrp. | 3. Umsch. Statorgrp. | 4. Umsch. Statorgrp. | |
|---|---|---|---|---|---|
| **1** | 1 | 1+n | 1+2*n | 1+3*n | ... |
| **2** | 2 | 2+n | 2+2*n | 2+3*n | ... |
| **...** | ... | ... | ... | ... | ... |
| **n** | n | 2*n | 3*n | 4*n | ... |

Der Läufer muss im Allgemeinen kürzer sein als n-1 Statorgruppen, damit ein Umrichter ausreichend Zeit für die Umschaltung auf die nächste Statorgruppe hat. Wenn T die Umschaltzeit und $v_{max}$ die maximale Geschwindigkeit des Läufers ist, muss der Läufer mindestens um $s = v_{max}*T$ kürzer sein als n-1 Statorgruppen.

Die Aufgabe wird auch gelöst durch die Bereitstellung eines Fahrgeschäfts, umfassend eine Fahrstrecke, einen Linearantrieb wie oben beschrieben, und wenigstens ein Fahrzeug, wobei der Läufer des Linearantriebs zum Antrieb des Fahrzeugs an diesem befestigt ist.

Ein Verfahren zum Betrieb eines Linearantriebs, insbesondere eines Linearantriebs wie oben beschrieben, umfasst folgende Schritte: a) während sich der Läufer im Bereich einer ersten Statorgruppe x (x = 1,..., m-1) befindet, Versorgung der ersten Statorgruppe x über eine erste Energieversorgungseinheit y (y = 1,..., n - 1) mit elektrischer Leistung; b) vor dem Eintritt des Läufers in die benachbarte zweite Statorgruppe x + 1, lastfreies Umschalten der der zweiten Statorgruppe x + 1 zugeordneten Schalteinheit x + 1, und anschließendes Aktivieren der der zweiten Statorgruppe x + 1 zugeordneten zweiten Energieverorgungseinheit y + 1; c) nach dem Austritt des Läufers aus der ersten Statorgruppe x, Deaktivieren der ersten Energieversorgungseinheit y und lastfreies Schalten der der ersten Statorgruppe zugeordneten ersten Schalteinheit x.

In einer besonders bevorzugten Ausführungsform umfasst das Verfahren einen weiteren Schritt d) vor dem Eintritt des Läufers in eine dritte Statorgruppe x + 2, lastfreies Umschalten der der dritten Statorgruppe x + 2 zugeordneten dritten Schalteinheit x + 2, und Aktivieren der der dritten Statorgruppe x + 2 zugeordneten ersten Energieversorgungseinheit y. Dieses Betriebsverfahren ist für eine Anordnung mit beispielsweise zwei Energieversorgungen, die alternierend an die Statorgruppen angeschlossen sind, ausgelegt. Bei einer Ausführung mit drei oder mehreren Energieversorgungen würde dagegen die dritte Statorgruppe von einer dritten Energieversorgung versorgt werden. Sobald die letzte in der Reihe der Energieversorgungen (y=n) eine Statorgruppe mit Energie versorgt hat, wird die nächste Statorgruppe wieder mit der ersten Energieversorgung (y=1)verbunden. Dieser Prozess wird mit der Fortbewegung des Läufers L von jeder Statorgruppe zur nächsten Statorgruppe wiederholt.

Insbesondere umfasst das Verfahren eine kontinuierlich und/ oder in diskreten Zeitabständen erfolgende Positionserfassung zur Erfassung der Position des Läufers wenigstens innerhalb des Streckenabschnitts. Eine Ansteuerung kann diese Informationen verwerten, indem sie Schalteinheiten und/ oder die Energieversorgungen (beispielsweise mittels Pulsfreigabe) steuert.

KURZE BESCHREIBUNG DER FIGUREN

Weitere Merkmale und Vorteile der Erfindung ergeben sich aus der Beschreibung spezieller Ausführungsbeispiele anhand der Figuren. Es zeigen:

Figur 1a, 1b     eine erste Ausführungsform der Erfindung;
Figur 2     eine zweite Ausführungsform der Erfindung;
Figur 3     eine schematische Darstellung der Abmessungen von Bauteilen gemäß der Erfindung;

BESCHREIBUNG BEVORZUGTER AUSFÜHRUNGSBEISPIELE

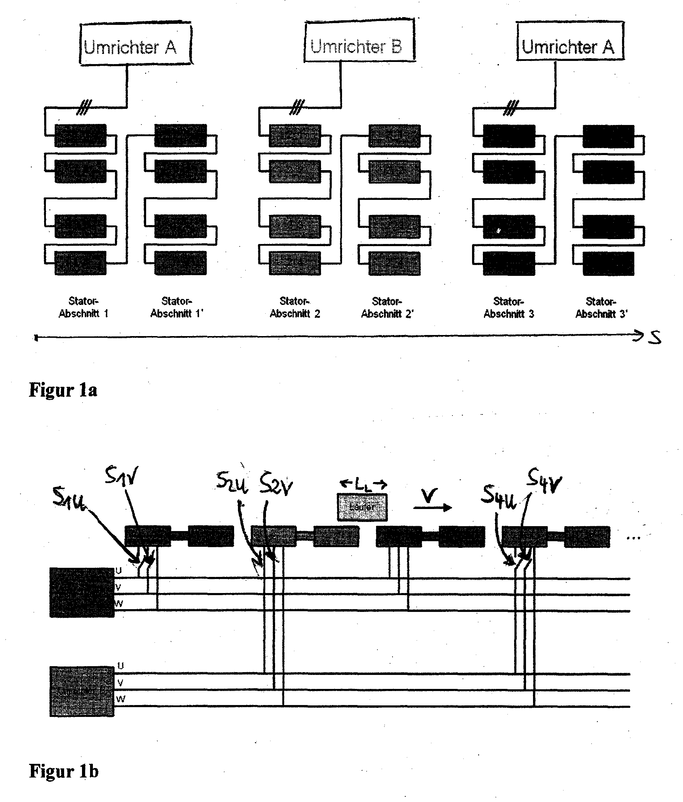

In den Figuren 1a und 1b ist eine erste Ausführungsform der Erfindung gezeigt. Die dargestellte Schaltung eines Linearantriebs weist Umrichter A, B und eine Vielzahl m von Statorgruppen 1-1', 2-2', 3-3',... auf.

Gemäß der Figur 1a sind in einem Abschnitt der Fahrstrecke s jeweils vier nebeneinander angeordnete Statoren (Statorelemente) $1\_1, 1\_2, 1\_3, 1\_4; 1'\_1, 1'\_2, 1'\_3, 1'4; 2\_1, 2\_2, 2\_3, 2\_4,...$ angeordnet. Diese jeweils vier nebeneinander angeordneten Statoren bilden jeweils einen Statorabschnitt. Die Statorabschnitte 1 und 1', 2 und 2', 3 und 3', etc., bilden jeweils eine Statorgruppe 1-1', 2-2', 3-3' bzw. 4-4' mit jeweils acht einzelnen Statoren. Die Statoren jeder Statorgruppe 1-1', 2-2', 3-3' bzw. 4-4' sind elektrisch in Reihe geschaltet. Außerdem weist die Schaltung für den gezeigten Streckenabschnitt genau zwei (n=2) Umricher A und B auf. Während der Umrichter A die ungeradzahligen Statorgruppen 1-1', 3-3',... mit Energie versorgt, ist der Umrichter B an die geradzahligen Statorgruppen 2-2', 4-4',... angeschlossen. Die Umrichter A und B wechseln sich somit bei der Versorgung der benachbart hintereinander angeordneten Statorgruppen 1-1', 2-2', 3-3', 4-4',... ab.

Jeweils zwei (n=2) benachbarte Statorgruppen, die von unterschiedlichen Umrichtern A bzw. B gespeist werden, können zu einer Statorgruppeneinheit zusammengefasst werden.

In der Figur 1b ist die Schaltung 1 für das Ausführungsbeispiel gemäß der Figur la näher skizziert. Die Umrichter A und B sind als dreiphasige Umrichter mit den Phasen U, V, W ausgebildet. Jeweils zwei Phasen U, V sind über Schützschalter bzw. Schützkontakte $S_{1U}, S_{1V}; S_{2U}, S_{2V}; S_{3U}, S_{3V};...$ mit dem jeweiligen Statorgruppen 1-1', 2-2', 3-3' bzw. 4-4' verbunden. Die dritte Phase W ist in diesem Ausführungsbeispiel fest mit den Statorgruppen 1-1', 2-2', 3-3' und 4-4' verdrahtet. Bei dieser Ausführungsform wird pro Statorgruppe eine Anzahl von zwei Schützschaltern bzw. Schützkontakten $S_U$ und $S_V$ benötigt. Soll die Phase W ebenfalls geschaltet werden, werden entsprechend drei Schützschalter $S_U$, $S_V$ und $S_W$ benötigt.

Im vorliegenden Ausführungsbeispiel bewegt sich, angedeutet durch einen Pfeil v, ein Läufer L mit einer Länge $L_L$ in einem bestimmten Zeitpunkt im Bereich der Statorgruppen 2-2' und 3-3'. Diese Statorgruppen 2-2' und 3-3'sind daher mit den entsprechenden Umrichtern A bzw. B über entsprechend geschlossene Schützschalter $S_{2U}$, $S_{2V}$ und $S_{3U}$, $S_{3V}$ verbunden und werden bestromt. Sämtliche anderen Statorgruppen entlang der Fahrstrecke sind von den Umrichtern A und B durch geöffnete Schützkontakte $S_U$, $S_V$ getrennt.

Sobald der Läufer den Bereich der Statorgruppe 2-2' verlassen hat, kann der ihm zugeordnete Umrichter B durch die Wegnahme der Pulsfreigabe deaktiviert, d.h. stromlos geschaltet werden. Anschließend wird die Statorgruppe 2-2' durch Öffnen der Schützschalter $S_{2U}$ und $S_{2V}$ die Statorgruppe 2-2' vom Umrichter B getrennt. Gleichzeitig können die Schützschalter $S_{4U}$ und $S_{4V}$ der Statorgruppe 4-4' geschlossen werden und die Statorgruppe 4-4' mit dem Umrichter B verbinden. Beide Schaltungen finden lastfrei statt. Anschließend kann der Umrichter B durch die Pulsfreigabe aktiviert werden, bevor der Läufer in den Bereich der Statorgruppe 4-4' eintritt. In diesem Augenblick sind die Statorgruppen 3-3' und 4-4' bestromt. Auf die beschriebene Weise findet ein lastfreies Umschalten des Umrichters B von der Statorgruppe 2-2' auf die Statorgruppe 4-4' statt.

Der Antrieb weist außerdem eine Antriebsregelung (nicht dargestellt) auf. Diese erfasst die für die Kommutierung der einzelnen Statorgruppen und für die Schaltung der Schalteinheiten erforderliche Position des Läufers entweder über Positionssensoren oder bevorzugt auch sensorlos aus Strömen und Spannungen der Statorgruppen.

In dieser Ausführungsform werden genau zwei Umrichter A, B verwendet, die abwechselnd auf einzelne Statorgruppen geschaltet werden können. Ein Statorgruppe kann prinzipiell ein einzelner Statorabschnitt oder mehrere Statorabschnitte umfassen. Im ersten Ausführungsbeispiel besteht jede Statorgruppe aus jeweils zwei in Reihe geschalteten Statorabschnitten. Im allgemeinen Fall kann eine Statorgruppe auch aus mehr als zwei Statorabschnitten bestehen. Dadurch wird jedoch die Wirkleistung schlechter und ohmschen Verluste steigen. Umrichter und Schalter müssen dann höhere Stromabgabefähigkeit aufweisen bzw. höheren Belastungsanforderungen genügen. Die Länge eines Statorabschnitts plus der Lücke zwischen zwei Abschnitten beträgt vorzugsweise eins ganzzahliges Vielfaches des Polabstands der Permanentmagnete des Läufers L.

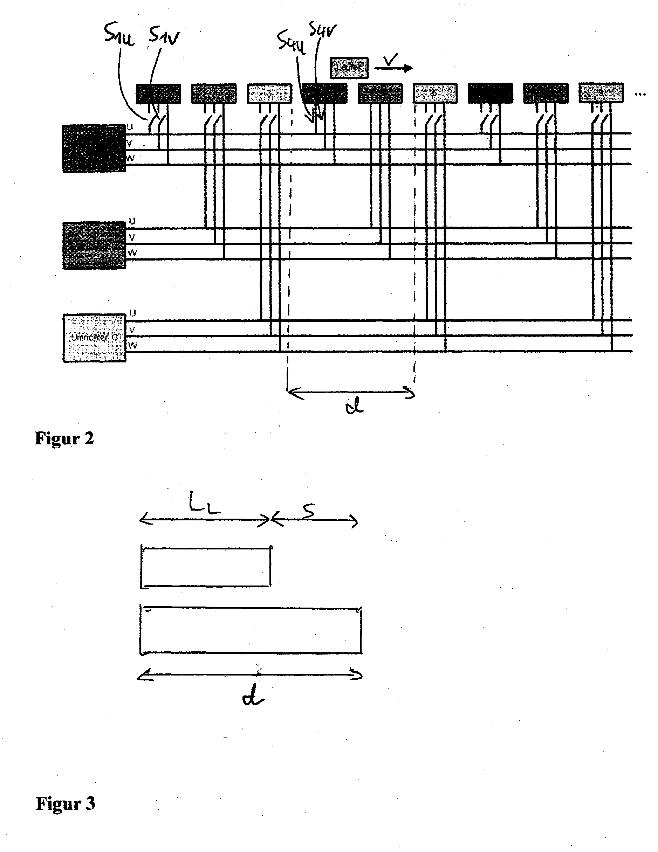

Eine weitere Ausführungsform der Erfindung ist in der Figur 2 skizziert. In diesem Fall sind drei (n=3) dreiphasige Umrichter A, B und C vorgesehen, die sich mit der Versorgung von m Statorgruppen 1, 2, 3,... abwechseln. Dabei sind zwei Phasen U, V über Schützschalter $S_{1U}$, $S_{1V}$; $S_{2U}$, $S_{2V}$; $S_{3U}$, $S_{3V}$;... mit den jeweiligen Statorabschnitten schaltbar, während die dritte Phase W entweder fest verdrahtet oder auch schaltbar angeordnet ist.

In diesem Ausführungsbeispiel besteht jede der m Statorgruppen 1, 2, 3,... aus nur einem Statorabschnitt. Jeweils m=3 benachbarte Statorgruppen können als Statorgruppeneinheit aufgefasst werden.

In der Schaltung sind zu jedem Zeitpunkt jeweils zwei "aktive" Statorgruppen von unterschiedlichen Umrichtern bestromt. Ein Umrichter A, B oder C bestromt zu einem bestimmten Zeitpunkt lediglich eine Statorgruppe. In der Momentaufnahme gemäß der Figur 2 sind lediglich die Statorgruppen 4 und 5, in deren Wirkungsbereich sich ein Läufer befindet, mit jeweils einem Umrichter A bzw. B verbunden. Im folgenden werden die Schützschalter $S_{6U}$, $S_{6V}$ der Statorgruppe 6 bei deaktiviertem Umrichter C lastfrei geschlossen. Danach wird die Pulsfreigabe des Umrichters C eingeschaltet, so dass dieser Leistung liefert. Sobald der Läufer L den Bereich des Statorabschnitts 4 verlassen hat, wird der Umrichter A stromlos geschaltet und die Schützschalter $S_{4U}$, $S_{4V}$ des Abschnitts 4 werden lastfrei geöffnet. Dieser Prozess wird mit der Fortbewegung des Läufers L fortschreitend wiederholt.

Vorteilhafterweise werden in beiden Ausführungsformen keine Thyristoren oder sonstige Halbleiter-Schaltelemente benötigt, die bei hohen Strömen eingesetzt werden müssen.

Vielmehr sind Schützschalter/Schützkontakte ausreichend, da im Wesentlichen lastfrei geschaltet wird. Der Länge $L_L$ des Läufers L muss in beiden Ausführungsbeispielen so kurz sein, dass vor seinem Eintritt in bzw. nach dem Verlassen einer Statorgruppe lastfrei geschaltet werden kann. Es muss sicher gestellt werden, dass der Läufer L so lange von einer bestimmten Anzahl von Statorgruppen (und Umrichtern) angetrieben wird, dass in dieser Zeit wenigstens ein Umrichter stromlos geschaltet sein kann und ein lastfreies Schalten der vom Läufer als nächstes angefahrenen (oder gerade verlassenen) Statorgruppe stattfinden kann.

Durch die mögliche kürzere Statorgruppenlänge in dieser Ausführungsform ergibt sich eine kürzere Bestromungszeit der Statorgruppen und eine größere Wirkleistung. Damit sinkt der Strombedarf. Folglich können die Umrichter kleiner dimensioniert werden.

Die Figur 3 zeigt das Verhältnis der Länge des Läufers $L_L$ im Vergleich zur Länge d einer Statorgruppe $L_S$ und einer Lücke zwischen zwei Statorgruppen. Demnach muss die Länge $L_L$ des Läufers L so kurz sein, dass ausreichend Zeit für die Umschaltung eines Umrichters auf eine in Fahrtrichtung nächstfolgende Statorgruppe zur Verfügung steht. Die minimale Umschaltstrecke s errechnet sich aus der minimalen Umschaltzeit T und der maximalen Geschwindigkeit $v_{max}$ des Läufers L, nämlich $L_L \leq d - v_{max} * T$. Die benötigte Umschaltzeit T hängt in erster Linie von der Art der verwendeten Schalter ab. Sie liegt typischerweise in einem Bereich von 20 ms bis 50 ms.

Zur Verkürzung der wirksamen Schaltzeiten der Schützkontakte kann der Schaltvorgang zeitlich vorgesteuert werden. Dies kann innerhalb der Teilzeiten, in denen die Erregerspule des Schützkontakts bereits bestromt wird, aber sich der Schützkontakt selbst noch nicht mechanisch bewegt, erfolgen.

**Patentansprüche**

1. Linearantrieb zum Antrieb eines Fahrzeugs entlang eines Streckenabschnitts einer Fahrstrecke umfassend:

   eine erste Anzahl m von Statorgruppen (1-1', 2-2', 3-3', 4-4'; 1, 2, 3, 4,...), die hintereinander entlang des Streckenabschnitts angeordnet sind, wobei m >= 2;
   eine zweite Anzahl n von Energieversorgungseinheiten (A, B: A, B, C), wobei jede der n Energieversorgungseinheiten (A, B; A, B, C) an bestimmte Statorgruppen (1-1', 2-2', 3-3', 4-4'; 1, 2, 3, 4) zur Versorgung der jeweiligen Statorgruppen (1-1', 2-2'. 3-3', 4-4'; 1, 2, 3, 4) mit elektrischer Energie angeschlossen ist, wobei n <= m; wenigstens m Schalteinheiten (S),
   wobei jede der m Schalteinheiten (S) einer der m Statorgruppen (1-1', 2-2', 3-3', 4-4'; 1, 2, 3, 4) zugeordnet ist, um den Zufluss elektrischer Energie zu einer jeweiligen Statorgruppe (1-1', 2-2', 3-3', 4-4'; 1, 2, 3, 4) zu ermöglichen und/ oder zu unterbrechen; und
   wenigstens einen entlang des Streckenabschnitts bewegbaren Läufer (L), der mit den von den Statorgruppen (1-1', 2-2', 3-3', 4-4'; 1, 2, 3, 4) erzeugten Magnetfeldern wechselwirkt, in deren Wirkungsbereich er sich befindet, wobei
   die zweite Anzahl n von Energieversorgungseinheiten (A, B; A, B, C) wenigstens zwei beträgt (n >= 2),
   wenigstens n Statorgruppen als Statorgruppeneinheit entlang des Streckenabschnitts benachbart derart angeordnet und wechselweise an jeweils eine der Energieversorgungseinheiten (A, B, C) angeschlossen sind, dass wenigstens eine der n Statorgruppen (1-1', 2-2', 3-3', 4-4'; 1, 2, 3, 4) vor dem Eintritt des Läufers (L) in den Wirkungsbereich der Statorgruppe und/oder nach dem Austritt des Läufers (L) aus dem Wirkungsbereich der Statorgruppe im Wesentlichen lastfrei schaltbar ist, wobei der Linearantrieb eine Steuerung zur Ansteuerung der Schalteinheiten (S) und/ oder der Energieversorgungen (A, B, C) aufweist, **dadurch gekennzeichnet, dass** die Steuerung wenigstens eine Positionserfassung zur Erfassung der Position des Läufers (L) wenigstens entlang des Streckenabschnitts aufweist, wobei
   die Positionserfassung als sensorlose Positionserfassung ausgebildet ist.

2. Linearantrieb nach Anspruch 1, **dadurch gekennzeichnet, dass**
   eine Anzahl k <= m Statorgruppen in einer oder mehreren Statorgruppeneinheiten mit jeweils n Statorgruppen derart benachbart angeordnet sind, dass zwischen dem Endpunkt der letzten Statorgruppe einer ersten Statorgruppeneinheit und dem Anfangspunkt der letzten Statorgruppe der benachbarten Statorgruppeneinheit ein Abstand d besteht, der mit der Länge $L_L$ des Läufers (L), der minimalen lastfreien Schaltzeit T einer Schalteinheit und der maximalen Geschwindigkeit vmax des Läufers (L) wie folgt zusammenhängt: d >= vmax * T + $L_L$.

3. Linearantrieb nach Anspruch 1 oder 2, **dadurch gekennzeichnet, dass**
   die Schalteinheiten (S) Schalter ($S_U$, $S_V$) zur Herstellung und/ oder zur Trennung einer Verbindung der Statorgruppen (1-1', 2-2', 3-3', 4-4'; 1, 2, 3, 4) mit den den Statorgruppen (1-1', 2-2', 3-3', 4-4'; 1, 2, 3, 4) jeweils zugeordneten Energieversorgungseinheit (A, B, C) aufweisen, wobei die Schalter (SU, SV) zum Schatten bei geringerer als der maximalen durch die Energieversorgungseinheiten (A, B, C) bereitgestellten Last ausgelegt sind.

4. Linearantrieb nach Anspruch 3, **dadurch gekennzeichnet, dass**
   die Schalter ($S_U$, $S_V$) als Schützschalter ausgebildet sind.

5. Linearantrieb nach einem der vorhergehenden Ansprüche, **dadurch gekennzeichnet, dass**
   die Energieversorgungseinheiten (A, 8, C) jeweils wenigstens einen Umrichter aufweisen.

6. Linearantrieb nach Anspruch 5, **dadurch gekennzeichnet, dass**
   die Umrichter als Umrichter mit wenigstens zwei Ausgangsphasen ausgebildet sind, die über jeweils wenigstens eine Schalteinheit (S) mit den ihnen zugeordneten Statorgruppen (1-1', 2-2', 3-3', 4-4'; 1, 2, 3, 4) verbunden sind.

7. Fahrgeschäft, umfassend eine Fahrstrecke, einen Linearantrieb nach einem der vorhergehenden Ansprüche, und wenigstens ein Fahrzeug, wobei der Läufer (L) am Fahrzeug befestigt ist.

8. Verfahren zum Betrieb eines Linearantriebs nach einem der Ansprüche 1 bis 6, das folgende Schritte umfasst:

   a) während sich der Läufer (L) im Bereich einer ersten Statorgruppe x (x = 1,..., m - 1) befindet, Versorgung der ersten Statorgruppe x über eine erste Energieversorgungseinheit y (y = 1,..., n -1) mit elektrischer Leistung;
   b) vor dem Eintritt des Läufers (L) in die benachbarte zweite Statorgruppe x + 1, lastfreies Umschalten der der zweiten Statorgruppe x + 1 zugeordneten Schalteinheit x + 1, und anschliessendes Aktivieren der der zweiten Statorgruppe x + 1 zugeordneten zweiten Energieverorgungseinheit y + 1;

c) nach dem Austritt des Läufers aus der ersten Statorgruppe x, Deaktivieren der ersten Energieversorgungseinheit y und lastfreies Schatten der der ersten Statorgruppe zugeordneten ersten Schalteinheit x.

9. Verfahren nach Anspruch 8, **dadurch gekennzeichnet, dass**
das Verfahren einen weiteren Schritt umfasst:

d) vor dem Eintritt des Läufers (L) in eine dritte Statorgruppe x + 2, lastfreies Umschalten der der dritten Statorgruppe x + 2 zugeordneten dritten Schalteinheit x + 2, und Aktivieren der der dritten Statorgruppe x + 2 zugeordneten ersten Energieversorgungseinheit y.

10. Verfahren nach Anspruch 8, **dadurch gekennzeichnet, dass**
das Verfahren eine kontinuierlich und/ oder in diskreten Zeitabständen erfolgende Positionserfassung zur Erfassung der Position des Läufers wenigstens innerhalb des Streckenabschnitts umfasst.

**Claims**

1. Linear drive for driving a vehicle along a track section of a driving track, comprising:

a first number m of stator groups (1-1', 2-2', 3-3', 4-4'; 1, 2, 3, 4,...) which are arranged behind one another along the track section, wherein m >= 2;
a second number n of energy supply units (A, B; A, B, C), wherein each of the n energy supply units (A, B; A, B, C) is connected to certain stator groups (1-1', 2-2', 3-3', 4-4'; 1, 2, 3, 4) for supplying electric energy to the respective stator groups (1-1', 2-2', 3-3', 4-4'; 1, 2, 3, 4), wherein n <= m; at least m switching units (S), wherein each of the m switching units (S) is associated to one of the m stator groups (1-1', 2-2', 3-3', 4-4'; 1, 2, 3, 4) for allowing and/or interrupting the flow of electric energy to a respective stator group (1-1', 2-2', 3-3', 4-4'; 1, 2, 3, 4); and
at least one rotor (L) which is moveable along the track section, which interacts with the magnetic fields generated by the stator groups (1-1', 2-2', 3-3', 4-4'; 1, 2, 3, 4) in whose field of action it is situated, wherein
the second number n of energy supply units (A, B; A, B, C) is at least two (n >= 2), at least n stator groups as stator group unit are arranged adjacent along the track section and are connected alternately to at least one of the energy supply units (A, B, C) in such a way that at least one of the n stator groups (1-1', 2-2', 3-3', 4-4'; 1, 2, 3, 4), prior to entry of the rotor (L) into the field of action of the stator group and/or after the rotor (L) has left the field of action of the stator group, can substantially be switched without load, wherein the linear drive comprises a controller for controlling the switching units (S) and/or the energy supplies (A, B, C), **characterized in that** the controller comprises at least one position recording for recording the position of the rotor (L) at least along the track section, wherein
the position recording is adapted as a sensor-less position recording.

2. Linear drive according to claim 1, **characterized in that**
a number k <= m stator groups in one or more stator group units is arranged adjacent with n stator groups each in such a way that between the endpoint of the last stator group of a first stator group unit and the starting point of the last stator group of the adjacent stator group unit there is a distance d relating to the length $L_L$ of the rotor (L), the minimum load-free switching time T of a switching unit and the maximum speed vmax of the rotor (L) as follows: d >= vmax * T + $L_L$.

3. Linear drive according to claim 1 or 2, **characterized in that**
the switching units (S) comprise switches (Su, Sv) for realising and/or for deconnecting a connection of the stator groups (1-1', 2-2', 3-3', 4-4'; 1, 2, 3, 4) to the energy supply units (A, B, C) associated respectively to the stator groups (1-1', 2-2', 3-3', 4-4'; 1, 2, 3, 4), wherein the switches (Su, Sv) are adapted for switching with a load which is smaller than the maximum load provided by the energy supply units (A, B, C).

4. Linear drive according to claim 3, **characterized in that**
the switches (Su, Sv) are adapted as contactor switches.

5. Linear drive according to one of the preceding claims, **characterized in that** the energy supply units (A, B, C) comprise one invertor each.

6. Linear drive according to claim 5, **characterized in that**
the invertors are adapted as invertors with at least two output phases which are connected to the associated stator groups (1-1', 2-2', 3-3', 4-4'; 1, 2, 3, 4) via at least one switching unit (S) each.

7. Fairground ride, comprising a driving track, a linear drive according to one of the preceding claims and at least one vehicle, wherein the rotor (L) is attached to the vehicle.

8. Method for operating a linear drive according to one of claims 1 to 6, comprising the following steps:

a) while the rotor (L) is in the region of a first stator group x(x=1,..., m - 1), supplying the first stator group x with electric power via a first energy supply unit y (y = 1,..., n - 1);
b) prior to entry of the rotor (L) into the adjacent second stator group x + 1, load-free switching of the switching unit x + 1 associated to the second stator group x + 1, and subsequently activating the second supply unit y + 1 associated to the second stator group x + 1;
c) after the rotor has left the first stator group x, deactivating the first energy supply unit y and load-free switching of the first switching unit x associated to the first stator group.

9. Method according to claim 8, **characterized in that**
the method comprises a further step:

d) prior to entry of the rotor (L) into a third stator group x + 2, load-free switching of the third switching unit x + 2 associated to the third stator group x + 2, and then activating the first supply unit y associated to the third stator group x + 2.

10. Method according to claim 8, **characterized in that**
the method comprises a continuous position recording and/or a position recording in discrete time intervals for recording the position of the rotor at least within the track section.

**Revendications**

1. Entraînement linéaire pour entraîner un véhicule le long d'une section de trajet d'un trajet parcouru, comprenant:

un premier nombre m de groupes de stator (1-1', 2-2', 3-3', 4-4'; 1, 2, 3, 4,...) arrangés l'un après l'autre le long de la section de trajet, où m >= 2;
un deuxième nombre n d'unités d'alimentation en énergie (A, B; A, B, C), où chacune des n unités d'alimentation en énergie (A, B; A, B, C) est connectée à certains groupes de stator (1-1', 2-2', 3-3', 4-4'; 1, 2, 3, 4) pour l'alimentation des groupes de stator respectifs (1-1', 2-2', 3-3', 4-4'; 1, 2, 3, 4) en énergie électrique, où n <= m; au moins m unités de commutation (S), où chacune des m unités de commutation (S) est associée à un des m groupes de stator (1-1', 2-2', 3-3', 4-4'; 1, 2, 3, 4) pour permettre et/ou interrompre le flux d'énergie électrique vers un groupe de stator respectif (1-1', 2-2', 3-3', 4-4'; 1, 2, 3, 4); et
au moins un rotor (L) qui est mobile le long de la section de trajet et qui interagit avec les champs magnétiques générés par les groupes de stator (1-1', 2-2', 3-3', 4-4'; 1, 2, 3, 4) dans la zone d'action desquels il est situé, où
le deuxième nombre n d'unités d'alimentation en énergie (A, B; A, B, C) est au moins deux (n >= 2),
au moins n groupes de stator sont arrangés adjacents en tant qu'unité de groupes de stator le long de la section de trajet (A, B, C) et sont connectés en alternance respectivement à une des unités d'alimentation en énergie (A, B, C) de sorte qu'au moins un des n groupes de stator (1-1', 2-2', 3-3', 4-4'; 1, 2, 3, 4) peut être commuté essentiellement sans charge avant l'entrée du rotor (L) dans la zone d'action du groupe de stator et/ou après la sortie du rotor (L) de la zone d'action du groupe de stator où l'entraînement linéaire comprend une commande pour commander les unités de commutation (S) et/ou les alimentations en énergie (A, B; A, B, C),
**caractérisé en ce que** la commande comprend au moins une détection de position pour détecter la position du rotor (L) au moins le long de la section de trajet,
où la détection de position est adapté en tant que détection de position sans capteur.

**2.** Entraînement linéaire selon la revendication 1, **caractérisé en ce que**
un nombre k <= m groupes de stator est arrangé adjacent dans une ou plusieurs unités de groupe de stator avec n groupes de stator respectifs de sorte qu'il y a entre le point final du dernier groupe de stator d'une première unité de groupe de stator et le point initial du dernier groupe de stator de l'unité de groupe de stator adjacente une distance d qui est en relation avec la longueur $L_L$ du rotor (L), le temps minimum de commutation sans charge T d'une unité de commutation et la vitesse maximale vmax du rotor (L) de la manière suivante: $d >= vmax * T + L_L$.

**3.** Entraînement linéaire selon les revendications 1 ou 2, **caractérisé en ce que**
les unités de commutation (S) comprennent des commutateurs (Su, Sv) pour réaliser et/ou pour déconnecter une connexion des groupes de stator (1-1', 2-2', 3-3', 4-4'; 1, 2, 3, 4) aux unités d'alimentation en énergie (A, B, C) associés respectivement aux groupes de stator (1-1', 2-2', 3-3', 4-4'; 1, 2, 3, 4),
où les commutateurs (Su, Sv) sont adaptés pour commuter avec une charge qui est plus faible que la charge maximale prévu par les unités d'alimentation en énergie (A, B, C).

**4.** Entraînement linéaire selon la revendication 3, **caractérisé en ce que**
les commutateurs (Su, Sv) sont adaptés sous forme de disjoncteurs contacteurs.

**5.** Entraînement linéaire selon une des revendications précédentes, **caractérisé en ce que** les unités d'alimentation en énergie (A, B, C) comprennent chacune au moins un invertisseur.

**6.** Entraînement linéaire selon la revendication 5, **caractérisé en ce que** les invertisseurs sont adaptés sous forme d'invertisseurs avec au moins deux phases de sortie, connectées aux groupes de stator associés (1-1', 2-2', 3-3', 4-4'; 1, 2, 3, 4) via au moins une unité de commutation (S).

**7.** Manège, comprenant un trajet parcouru, un entraînement linéaire selon une des revendications précédentes, et au moins un véhicule, le rotor (L) étant attaché au véhicule.

**8.** Procédé pour opérer un entraînement linéaire selon une des revendications 1 à 6, comprenant les étapes suivantes:

a) pendant que le rotor (L) est situé dans la zone d'un premier groupe de stator x(x=1,..., m - 1), fournir de l'énergie électrique au premier groupe de stator x via une première unité d'alimentation en énergie y (y = 1,..., n - 1);
b) avant l'entrée du rotor (L) dans le deuxième groupe de stator adjacent x + 1, commutation sans charge de l'unité de commutation x + 1 associée au deuxième groupe de stator x + 1, et puis activer la deuxième unité d'alimentation en énergie y + 1 associée au deuxième groupe de stator x + 1;
c) après la sortie du rotor du premier groupe de stator x, désactiver la première unité d'alimentation en énergie y et commutation sans charge de la première unité de commutation x associée au premier groupe de stator x.

**9.** Procédé selon la revendication 8, **caractérisé en ce que**
le procédé comprend une autre étape:

d) avant l'entrée du rotor (L) dans un troisième groupe de stator x + 2, commutation sans charge de la troisième unité de commutation x + 2 associée au troisième groupe de stator x + 2, et activer la première unité d'alimentation en énergie y associée au troisième groupe de stator x + 2.

**10.** Procédé selon la revendication 8, **caractérisé en ce que**
le procédé comprend une détection de position continue et/ou dans des intervalles de temps discrets pour détecter la position du rotor au moins au sein de la section de trajet.

Stator-Abschnitt 1    Stator-Abschnitt 1'    Stator-Abschnitt 2    Stator-Abschnitt 2'    Stator-Abschnitt 3    Stator-Abschnitt 3'

**Figur 1a**

**Figur 1b**

$S_{1U}$  $S_{1V}$          $S_{4U}$  $S_{4V}$

Läufer          $V$

**Figur 2**

$L_L$          $S$

$d$

**Figur 3**

**EP 2 156 979 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19748911 A1

- DE 3011980 A1